# EUROPEAN PATENT SPECIFICATION

(11) **EP 0 844 169 B1**
(45) Date of publication and mention of the grant of the patent: **17.03.2004**
(21) Application number: 97120293.2
(22) Date of filing: 19.11.1997
(51) Int. Cl.: B62K 5/00

(54) **Small vehicle**
Kleinfahrzeug
Véhicule compact.

(30) Priority: 20.11.1996 JP 30960496; 17.10.1997 JP 28570897
(43) Date of publication of application: 27.05.1998
(73) Proprietor: YAMAHA HATSUDOKI KABUSHIKI KAISHA, Iwata-shi Shizuoka-ken, 438 (JP)
(72) Inventor: Kobayashi, Takashi, Iwata-Shi, Shizuoka-ken (JP)
(74) Representative: Grünecker, Kinkeldey, Stockmair & Schwanhäusser Anwaltssozietät

(56) References cited:
- EP-A- 0 636 536
- US-A- 5 312 126
- US-A- 5 397 145

## Description

The present invention relates to a small vehicle according to the preamble part of the independent claim 1 and as known from US-A-5 397 145.

US-A-5,397,145 discloses a four-wheel velocipede including a single front to rear frame member formed of three sections: a front section, a middle section, and a rear section, wherein the rear section extends out of the plane of the front and middle sections upwardly.

US-A-5,312,126 discloses a riding apparatus driven by an electric motor or pedal, wherein the riding apparatus comprises a frame formed of a central, a front, and a seat framework. The central framework supports the driving mechanism and the rear wheels, the front framework supports the front wheels and the steering mechanism, and the seat framework supports a seat.

Small vehicles operated with a battery-powered electric motor intended for use by people having difficulty in walking, disabled, or aged people are drawing attention in recent years. Such small vehicles are constituted to supply electric current from a battery to an electric motor by operating an accelerator member and to drive wheels for rotation with the electric motor.

In such small vehicles, it is necessary to mount the heavy battery on the vehicle body and when it is not in use, the battery must be charged through a charger connected to a household outlet. In the past, it has been typical to reinforce the vehicle body with a reinforcing member, to secure the battery to the reinforcing member, and to charge the battery remaining on the vehicle (for example, refer to the Laid-open Japanese Utility model Application No. Hei-5-11927). Also the small vehicle has had the constitution in which a wide footstep is disposed between the front and rear wheels and a seat is disposed in a position behind the step and near the rear wheel.

The small vehicle is also intended to permit a stabilized riding posture by making the footstep as wide as possible. As a result, the small vehicle has had the constitution in which a wide footstep is disposed between the front and rear wheels and a seat is disposed in a position behind the step and near the rear wheel.

The small vehicle described above is disadvantageous in that the vehicle itself must be moved toward the charger every time of charging, or depending on the charging location, an extension cable is required, making the charging work troublesome.

Moreover, the reinforced main frame increases the overall size of the vehicle body according to the reinforcement, which makes handling and moving while not in use difficult.

Furthermore, the step stands in the way of the rider during riding and getting off. Therefore, the rider, before sitting on the seat, has first to step on the footstep. This detracts from the ease of riding and getting off for those who have difficulty in walking.

The object of the invention is to improve the structure of a small vehicle and to overcome the above-mentioned drawbacks.

According to the present invention, the objective is solved by a small vehicle according to claim 1.

The small vehicle offers an advantageous vehicle structure, preferably for a battery-powered small vehicle which is capable of facilitating charging operation, improving the ease of riding and getting off, reducing the overall vehicle size, reducing weight, and permitting easy handling and moving.

With the small vehicle, the vehicle body frame is disposed near the vehicle width center to extend in the longitudinal direction of the vehicle, and the vehicle body frame has the front half portion extending generally horizontally and the rear half portion continuously extending obliquely up rearward. The resultant effects are simplified frame constitution, reduced overall vehicle size, weight, and cost.

Furthermore, the battery is installed to and along the rear half portion so that the battery may be removed obliquely up rearward. The resultant effect is that the installation and removal work is made easy. Also, since the battery is disposed along the rear half portion of the vehicle body frame, the heavy battery is supported firmly with a wide area.

According to a preferred embodiment, a wheel shaft arm member for shaft-supporting the front wheels is supported on the front half portion through a swing support mechanism, and the swing support mechanism is constituted to pivot-support the wheel shaft arm member for up and down swinging and to restrict the up and down swing angle by interposing a resilient force. The resultant effect is the simplified constitution providing the independent suspension of the left and right front wheels, good ground contact of the left and right front wheels, and improved ride feeling.

Furthermore, since the swing angle of the wheel shaft arm member is restricted with the elastic force, along with the vehicle body frame constitution elongate in the longitudinal direction near the vehicle width center, an effect of the vehicle body frame absorbing shocks to the wheels by the torsional deformation of the vehicle body frame is expected. This also alleviates shocks to the rider.

According to a preferred embodiment, the rear am is pivoted for up and down swinging at the front side portion of the rear half portion of the vehicle body frame and the shock absorber is disposed between the rear portion of the rear half portion bent up rearward and the rear arm. Thus, the space for installing the shock absorber is easily secured.

Furthermore, since the left and right arm portions of the rear arm are disposed with smaller mutual distance toward the front of the vehicle, an effect is the improved ease of riding and getting off with less likelihood of the rider's feet interfering with the rear arm when the rider rides, gets off, and move near the side of the seat.

Furthermore, the rear arm is constituted to be narrower toward the front of the vehicle and pivoted at a position near the vehicle width center, and the rear wheels are disposed at the outer sides of the rear arm. The resultant effects are that a large displacement of the rear wheels may be absorbed with a small deformation of the pivoting portion, a simple constitution provides independent suspension of the rear wheels, and improved ground contact property and improved ride feeling.

Preferably, the front wheels are shaft-supported with the wheel shaft arm member supported with the swing support mechanism, the rear arm is pivoted for up and down movement, the shock absorber is interposed between the rear arm and the rear half portion of the vehicle body frame, and the left and right rear arm portions are disposed equally on both sides of the vehicle center line so that the distance between both rear arm portions is smaller toward the front of the vehicle. Therefore, the following effects are obtained: ground contact property is secured for both front and rear wheels, ride feeling is improved, the shock absorber attachment space is easily secured, and the ease of riding and getting off is improved.

Preferably, the wheel shaft arm member is supported through the swing support mechanism, the rear arm is pivoted for up and down swinging with the pivot shaft disposed at the position forward of the rear wheels on the vehicle body frame, and the left and right rear arm portions are disposed equally on both sides of the vehicle center line so that the distance between both rear arm portions is smaller toward the front of the vehicle. Therefore, in addition to the effects of the claim 1, the following effects are obtained: ride feeling is improved, and the shock absorber attachment space is easily secured.

Preferably, the battery holding boxes are secured to the rear half portion of the vehicle body frame, the lid member which may be opened and closed is attached to the rear end of each of the holding boxes, and the battery is removably installed in each of the battery holding boxes. As a result; the following effects are obtained: the direction of the batteries is easy for installation and removal, the batteries can easily slide down by their own weight when they are installed. Furthermore, the lid member provided on each holding box prevents tampering, thefts, and electrical poor contact due to water infiltration.

According to a preferred embodiment, two battery holding boxes are disposed on left and right sides of the rear half of the vehicle body frame and one of the two is used as a small object holding compartment. As a result, an effect is obtained that the boxes of the same external design may be used for various purposes.

Preferably, the front end portion of the battery case is removably fitted to the battery holding case to support the battery, Thus, the battery may be installed and removed easily without interfering with other parts, while reducing the size, weight, and cost of the battery holding case.

Preferably, the attachment position of the seat on the rear half portion of the vehicle body frame is made adjustable in forward and rearward directions along the rear half portion. Accordingly, the best attachment position for the rider is obtained in vertical and longitudinal directions so that the best riding posture is taken.

The wheel distance can be made smaller between the rear wheels than between the front wheels, locus difference between the inside rear wheel and the inside front wheel during a turn is reduced so that the rear wheel is prevented from hitting or involving an obstacle present on the inside wheel side.

The footstep can be disposed between the left and right front wheels so that the space for placing the feet is sufficiently secured. Furthermore, since the footstep portion is located in the front part of the vehicle, the footstep does not stand in the way of the rider during riding and getting off. Thus, ease of riding and getting off is secured while securing the foot placement space.

Preferably, the footstep is constituted with the wide footstep portion extending between the left and right front wheels in the vehicle width direction and the narrow footstep portion continuously extending from the wide footstep portion and becoming narrower toward the rear of the vehicle to be approximately the same width as the width of the seat in plan view. Thus ,sufficient space for placing feet may be obtained without sacrificing the ease of riding and getting off and the rider may be seated in stabilized riding posture.

That is to say, since the wide footstep portion is provided, a sufficient space for placing feet is obtained. Furthermore, since the portion of the footstep near the seat is made approximately of the same width in plan view as the width of the seat, the rider may stand on the ground near the seat when riding and getting off, the rider may be seated by simply lowering the hip from the standing posture. That is to say, the rider need not first step on the footstep before seating.

Also, since the width of the narrow footstep portion is made with the same width as that of the seat in plan view, when the vehicle makes a turn, the narrow footstep portion passes along a locus inward of the rear inside wheel locus so that the narrow footstep portion may avoid the problem of hitting or involving any obstacle.

Further preferred embodiments of the present invention are laid down in the further subclaims.

In the following, the present invention is explained in greater detail by means of several embodiments thereof in conjunction with the accompanying drawings, wherein:
FIG. 1 is a side view for describing an electric motor-operated small four-wheel vehicle as a first embodiment ; FIG. 2 is a plan view of the electric motor-operated small four-wheel vehicle;
FIG. 3 is a cross-sectional front view showing a swing support mechanism for a wheel shaft member;
FIG. 4 is a cross-sectional side view of the swing support mechanism;
FIG. 5 is a cross-sectional front view of a rear arm pivot support section;
FIG. 6 is a cross-sectional plan view showing a modified example of the rear arm pivoting section;
FIG. 7 is a side view for illustrating the electric motor-operated small four-wheel vehicle according to the second embodiment;
FIG. 8 is a plan view of the electric motor-operated small four-wheel vehicle according to the second embodiment of the invention;
FIG. 9 is a plan view for illustrating the vehicle body cover of the electric motor-operated small four-wheel vehicle according to the second embodiment of the invention;
FIG. 10 is a side view for illustrating the battery inserting and removal actions according to the second embodiment;
FIG. 11 shows a cross section taken along the line XI-XI in FIG. 10; and
FIG. 12 is an explanatory drawing of the battery inserting and removal actions according to the second embodiment.

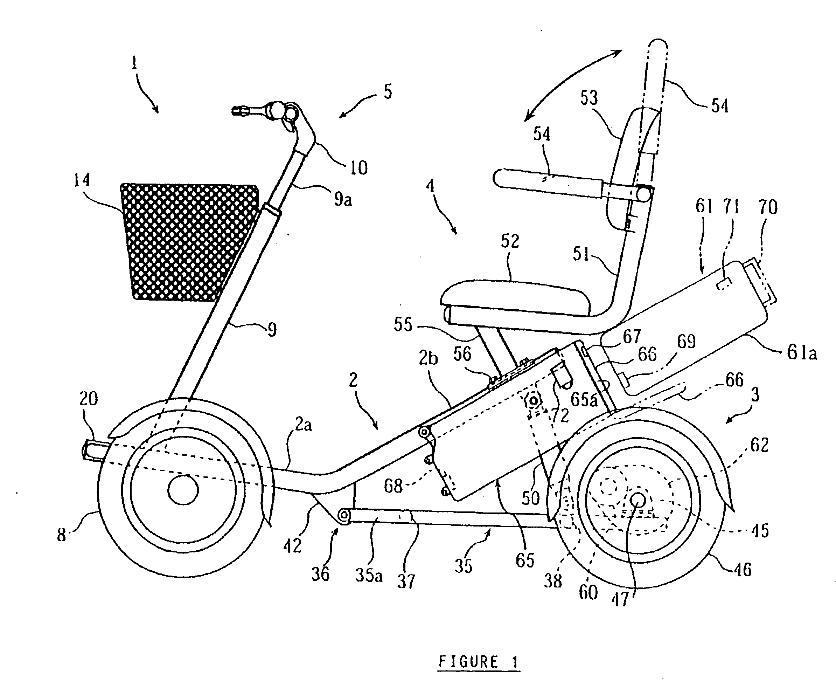

FIGs. 1 to 6 are for describing an electric motor-operated small four-wheel vehicle as a first embodiment.

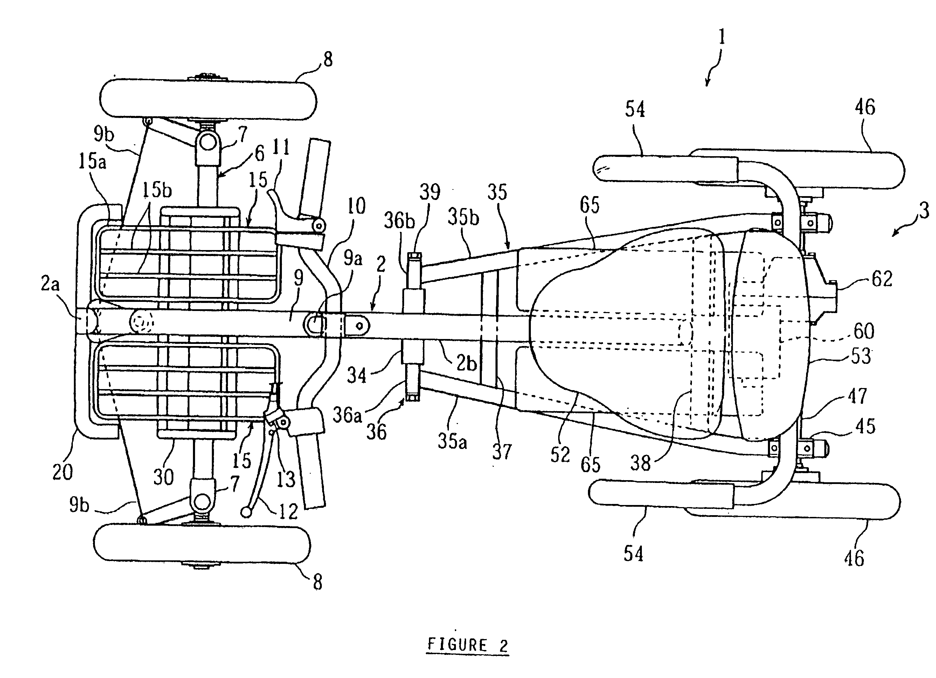

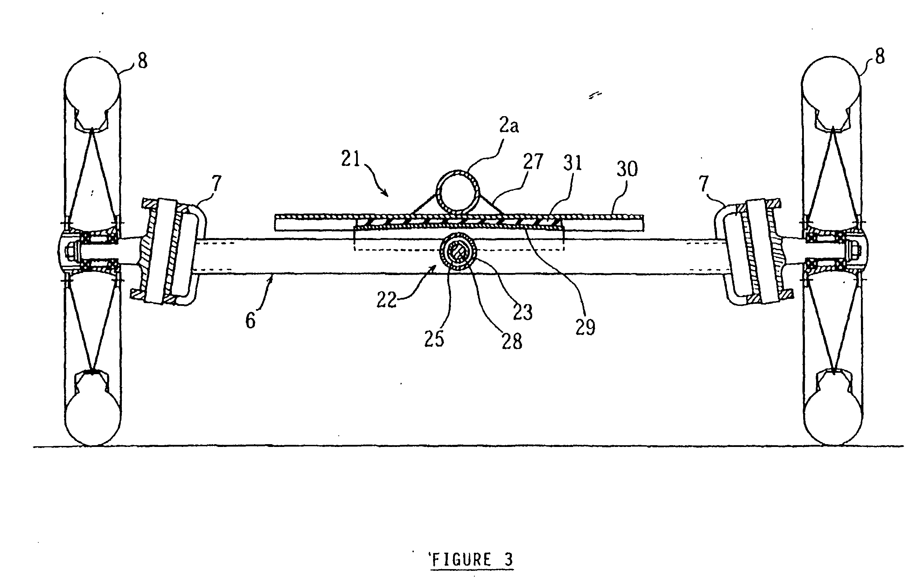

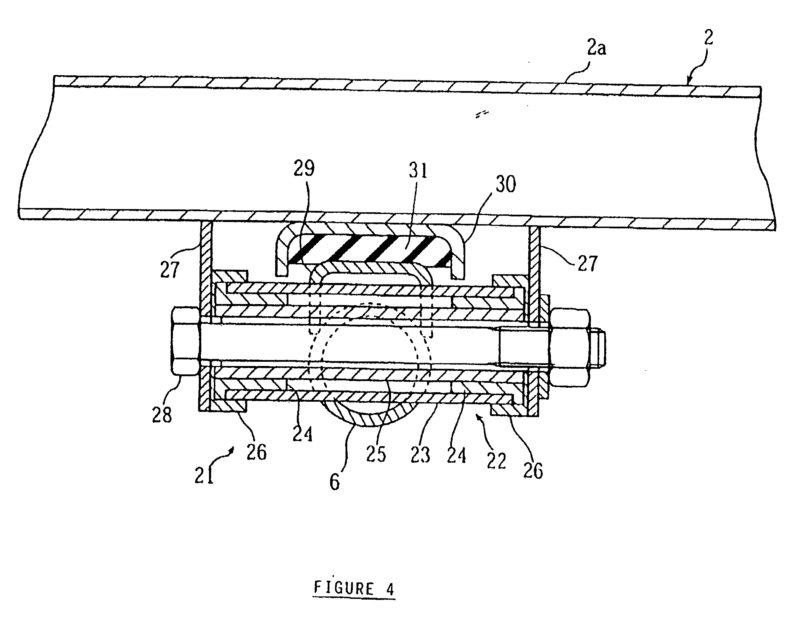

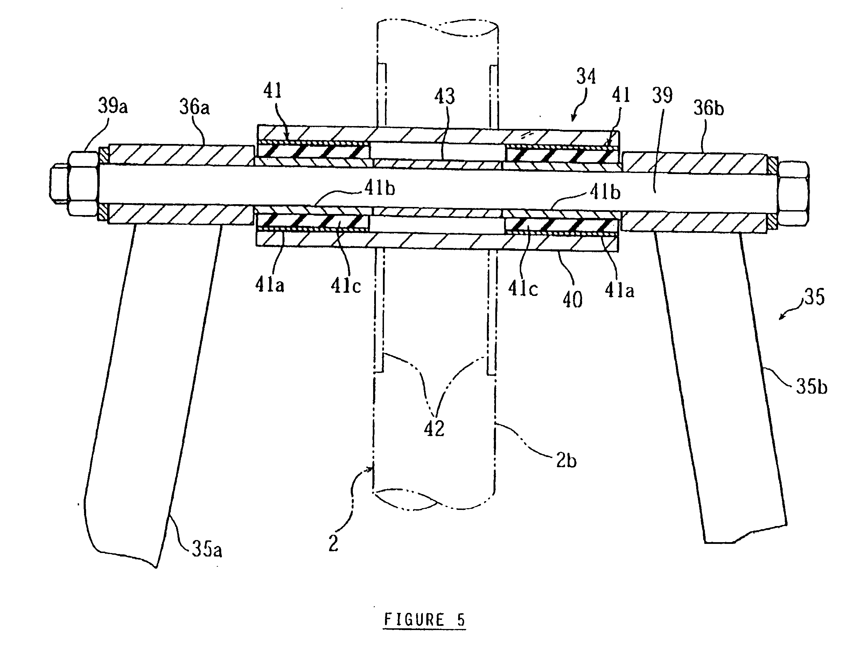

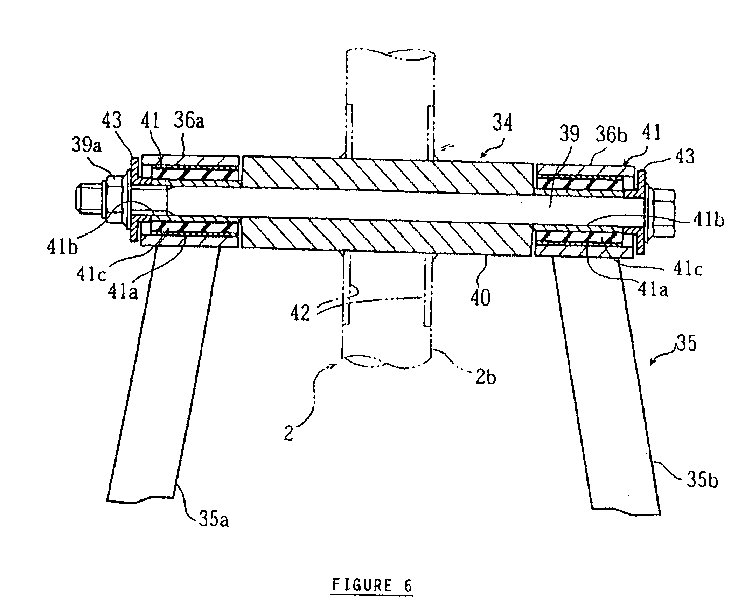

FIGs. 1 and 2 are respectively side and plan views of the electric motor-operated small four-wheel vehicle, FIGs. 3 and 4 are cross-sectional front and side views showing a swing support mechanism for a wheel shaft member, FIG. 5 is a cross-sectional front view of a rear arm connecting section, and FIG. 6 shows a modified example of the connecting section.

In the drawings are shown, an electric motor-operated small four-wheel vehicle 1 comprising; a vehicle body frame 2, a drive system 3, a seat mechanism 4, and a steering mechanism 5. The vehicle body frame 2 is made of a steel pipe extending longitudinally in the vehicle width center, and is constituted with a front half portion 2a extending generally horizontally and with a rear half portion 2b continuously extending in a straight line back rearward from the front half portion 2a.

At the front half portion 2a is disposed a wheel shaft arm member 6. Front wheels 8 are shaft-supported on both ends of the wheel shaft arm member 6, each through a joint member 7, for right and left turns. The lower end of a steering pipe 9 constituting the steering mechanism 5 is secured to a position, slightly forward of the wheel shaft arm member 6, on the front half portion 2a. The steering pipe 9 extends upward with a rearward tilt. A T-shaped steering handlebar 10 is attached to the upper end of a steering shaft 9a inserted for free rotation in the steering pipe 9. The lower end of the steering shaft 9a is connected through a linking mechanism 9b including tie rods and knuckle arms to the front wheels 8, 8.

An accelerator lever 11 is disposed at the right hand grip portion of the steering handlebar 10. A brake lever 12 is disposed at the left hand grip portion of the steering handlebar 10. The brake lever 12 is provided with a parking lock button 13 for locking the brake lever 12 in the gripped state. A basket 14 for holding objects is attached on the front side of the steering shaft 9.

A pair of footsteps 15, 15 are disposed between the front wheels 8, 8 on both sides of the front half portion 2a and the steering pipe 9. The footstep 15 is constituted with a rectangular pipe frame 15a and a plural number of bridging bars 15 spanning the opposite sides of the frame 15a, and is secured to the top surface of a swing limiting plate 30, to be described later, of the wheel shaft arm member 6. Such an arrangement of the footsteps 15, 15 efficiently utilizes the dead space between the front wheels 8, 8. A bumper member 20 of a T shape in plan view is secured to the front end of the front half portion 2a. The bumper member 20 is made of a steel pipe wrapped with a rubber material.

The wheel shaft arm member 6 is supported through a swing support mechanism 21 to the front half portion 2a. The swing support mechanism 21, as shown in FIGs. 3 and 4, pivot-supports the wheel shaft arm member 6 for swinging up and down or about the longitudinal axis of the vehicle, and limits the swing angle of the wheel shaft arm member 6. The swing support mechanism 21 will be described below.

A swing shaft 22 is passed through in the longitudinal direction of the vehicle and secured to the vehicle width center of the wheel shaft arm member 6. The swing shaft 22 comprises an outer cylinder 23, right and left bushings 24, 24 inserted in both ends of the outer cylinder 23, collars 25 inserted in the bushings 24, 24, and caps or dust covers 26 covering both ends of the outer cylinder 23. The outer cylinder 23 is secured to the wheel shaft arm member 6. A first swing limiting plate 29 is disposed above the swing shaft 22 and secured to the wheel shaft arm member 6.

A pair of brackets 27, 27 are disposed and secured to the underside of the front half portion 2a so as to be in contact with both end surfaces of the dust covers 26, 26. A bolt 28 passes through both of the brackets 27, 27 for shaft-supporting the swing shaft 22. In this way, the wheel shaft arm member 6 is supported for swinging up and down.

The first swing limiting plate 29 is bend-formed in an arcuate shape of a large curvature and disposed to extend along the longitudinal top surface of the wheel shaft arm member 6. The second swing limiting plate 30 extending to cover the first swing limiting plate 29 is secured to the underside of the front half portion 2a. The second swing limiting plate 30 is generally in a straight line shape and longer than the first swing limiting plate 29. An elastic member 31 made of rubber or the like is interposed between both of the swing limiting plates 29, 30. The up and down swinging is limited with the deformation resistance (elastic deformation) of the elastic member 31.

The front end of a rear arm 35 is pivot-supported for free up and down swinging with a pivot shaft 39 at the bent portion between the front half portion 2a and the rear half portion 2b of the vehicle body frame 2. The rear arm 35 comprises paired left and right arm portions 35a, 35b with their respective front ends having boss portions 36a, 36b. The left and right arm portions 35a, 35b are connected together at their forward and rearward positions through cross pipes 37, 38. The left and right arm portions 35a, 35b are symmetrically disposed in plan view with their mutual distance widening toward the rear.

The pivot support shaft 39 is passed through the boss portions 36a, 36b respectively fixed to the left and right rear arms 35a, 35b and a pivot support tube 34 fixed to the rear half portion 2b, and tightened and secured with a nut 39a. The pivot support tube 34 as shown in FIG. 5 comprises a tube 40 and elastic members 41 inserted in both ends of the tube 40. Each of the elastic members 41 comprises an outer tube 41a, an inner tube 41b, and a rubber member 41c bake-applied between both tubes 41a, 41b. The tube 40 is secured to paired left and right support brackets 42, 42 secured to the underside of the rear half portion 2b. In this way, the rear arm 35 is supported for free up and down swinging about the pivot shaft 39 and for limited up and down rotation about the longitudinal axis of the vehicle within an angle limited with the resilient force of the resilient members 41. Also shown is a collar 43 disposed between the left and right resilient members 41 to prevent them from moving in the vehicle width directions.

At the ends of the left and right arm portions 35a, 35b are erected brackets 45 (FIGs. 1 and 2) pivot-supporting drive shafts 47, 47. On the ends of the drive shafts 47, 47 are fixed rear wheels 46, 46. As seen from FIG. 2; the distance between the left and right rear wheels 46, 46 is set smaller than that between the front wheels 8, 8. Such an arrangement reduces the difference between the inner wheel locus of the rear wheel 46 and the inner wheel locus of the front wheel 8 when the vehicle makes a turn so that the rear wheel 46 is prevented from coming into contact with any obstacles present on the inner wheel side.

The lower end of a shock absorber 50 is pivot-supported in the vehicle width center of the cross pipe 38 of the rear arm 35. The upper end of the shock absorber 50 tilting forward is pivot-supported near the rear end of the rear half portion 2b.

The seat mechanism 4 is disposed on the rear half portion 2b of the vehicle body frame 2. The seat mechanism 4 comprises a seat frame 51 of a generally inverted L shape in side view, a seat 52, and a backrest 53. Left and right armrests 54, 54 are attached to the left and right upper end portions of the seat frame 51 so as to be movable between a generally horizontal position for use and a generally upright stowed position. A seat post 55 is secured to the underside of the seat frame 51. The seat post 55 is secured with a plural number of bolts 56 near the rear end of the rear half portion 2b so as to be removable and movable or adjustable along the rear half portion 2b.

Here, in order to make the attachment position of the seat post 55 variable, a plural number of nuts (not shown) are fixed with. longitudinal intervals to the inside surface of the rear half portion 2b. The attachment position of the seat post 55 may be changed by inserting the bolts 56 in different nuts. Here, the rear portion of the seat 52 in plan view overlaps the front portions of the rear wheels 46.

The drive system 3 is disposed between the rear half portion 2b of the vehicle body frame 2 and the rear arm 35. The drive system 3 comprises an electric motor 60 for rotation-driving the rear wheels 46 and two batteries 61, 61 for supplying power to the electric motor 60. The electric motor 60 is disposed between the left and right rear wheels 46, 46 and secured with brackets (not shown) to the rear arm 35. The output shaft of the electric motor 60 is connected through a transmission to a differential gear device 62 which in turn is connected to the drive shafts 47, 47. In this way, electric current commensurate with the amount of actuation of the accelerator lever 11 is supplied from the batteries 61 to the electric motor 60 to control the vehicle speed.

Each of the batteries 61 comprises a plural number of single cells encased in a battery case 61a which in turn is removably installed in each of battery holder boxes 65, 65 arranged in parallel on left and right sides of the shock absorber 50 in the same tilted state as the rear half portion 2b. The battery holder boxes 65 are secured in a suspended state to the rear half portion 2b using bolts. Each of the holding boxes 65 is a bottomed square tube with its rear end opening 65a located in the space surrounded with the seat frame 51, the left and right rear wheels 46, and the electric motor 60, and with the rear end opening 65a facing rearward of the vehicle.

The opening 65a of the holding box 65 is provided with a lid member 66 hinged to the lower brim of the opening 65a for opening and closing the opening 65a. The lid member 66 is provided with a lock mechanism 67 for locking the lid member 66 in a closed state to prevent the battery from being stolen or tampered.

On the bottom wall in the holding box 65 is disposed a male connector 68 for connecting the battery 61 to the electric motor 60 side. On the bottom surface of the battery case 61a is disposed a female connector 69 to be electrically connected to the male connector 68. When the battery 61 is inserted in the holding box 65, the female connector 69 is automatically connected to the male connector 68.

The battery case 61a is provided, at its upper brim, with a U-shaped, foldable handle 70 to be gripped by hand when the battery case 61a is inserted or taken out. On a side surface of the battery case 61a is disposed a connection terminal 71 for charging. An opening for charging is made on the portion of the side wall of the holding box 65 corresponding to the charge terminal 71. The opening for charging is provided with a lid 72 to be opened or closed.

Here, the battery 61 may be charged either in the state of being on or off the vehicle. When to be charged off the vehicle, the lid member 66 is unlocked, the battery 61 is drawn out and brought to the place where a charger is present, and a charger plug is plugged into the charge terminal 71. When to be charged on the vehicle, the lid 72 of the holding box 65 is opened, and the charger plug is plugged through the charge opening into the charger terminal 71.

Next, functions and effects of the embodiment will be described.

With the small four-wheel vehicle 1 of the embodiment, since the vehicle body frame 2 made of steel pipe and having the front half portion 2a extending generally horizontally and the rear half portion 2b continuously extending from the front half portion 2a obliquely up rearward is supported with the rear wheels 46, it is possible to simplify the frame structure, and reduce the overall size and weight while securing strength and rigidity. As a result, the vehicle when not in use may be easily handled and moved, or carried on a carrier vehicle and moved easily. Also, the vehicle cost may be reduced. While the embodiment uses a single pipe disposed in the vehicle width center to constitute the vehicle body frame, two or more parallel pipes may be disposed near the vehicle width center to constitute the vehicle body frame.

Since the two sets of holding boxes 65 are disposed along the rear half portion 2b of the vehicle body frame 2 and the openings 65a of the holding boxes 65 are made to face rearward, the battery 61 may be easily inserted and taken out obliquely without interfering with other parts of the vehicle. Furthermore, since the battery 61 is disposed removably, the vehicle itself need not be brought near the charger and therefore a troublesome extension cable is unnecessary. Thus, the charging operation is facilitated. Furthermore, since the holding boxes 65 are directly secured along the vehicle body frame 2, attachment work is simplified and attachment strength for supporting the heavy battery 61 is secured. Since the lid member 66 is disposed on the holding box 5, tampering, theft, and electrical troubles due to water infiltration may be prevented.

By the way, there are road conditions such as a flat road with little slopes requiring only one set of battery 61. Under such conditions, one of the two battery holding boxes 65 not in use may be used as a compartment for holding small objects.

When the battery holding box 65 is used for holding small objects, the electric components such as the connectors are preferably removed or protected with a cover to prevent them from being damaged. The holding box 65 is provided with a lock mechanism 67 for locking the lid member 66 so that the holding box 65 may be used for holding valuable objects. This makes it possible to use the same external design of the holding box for various purposes.

This embodiment provides an independent suspension of the left and right front wheels 8, 8 with a simple constitution. That is to say, the wheel shaft arm member 6 is supported with the swing support mechanism 21 on the front half portion 2a of the vehicle body frame 2 so that the wheel shaft arm member 6 may swing up and down about the longitudinal axis of the vehicle, and the swing angle range of the wheel shaft arm member 6 is restricted with the elastic member 31. For example, when the left front wheel 8 negotiates a swell on a road, the wheel shaft arm member 6 swings so that the left end of the wheel shaft arm member 6 is raised to absorb shocks and secure ground contact of the front wheels 8, 8.

Also, since the vehicle body frame 2 is constituted with the single pipe disposed in the vehicle width center, an effect is expected that the vertical movements of the front wheels 8, 8 are absorbed by the torsion of the pipe. Therefore, even when the wheel shaft arm member 6 strikes hard on the elastic member 31, shocks to the rider may be alleviated with the elastic force of the elastic member 31 and with the torsion of the pipe so that riding comfort is improved.

This embodiment permits to secure easily the attachment space for the shock absorber 50, to eliminate the need for additional components for attaching the shock absorber 50, and to simplify the rear wheel suspension constitution. That is to say, since the front end of the rear arm 35 is pivoted to the bent portion at the front portion of the rear half portion 2b of the vehicle body frame 2 so that the rear arm 35 may be swung up and down, a large space is provided between the rear portion of the rear arm 35 and the rear half portion 2b sloping obliquely back upward to accommodate the shock absorber 50. By the way, while this embodiment uses a single shock absorber disposed in the vehicle width center, left and right arm portions 35a, 35b may be respectively provided with shock absorbers.

Furthermore, ease of riding and getting off is improved for those who have difficulty in walking or aged people. That is to say, since the left and right arm portions 35a, 35b of the rear arm 35 are arranged to be nearer to each other toward the front of the vehicle as seen in plan view, the rider's foot is less likely to interfere with the rear arm 35 when the rider sits on the seat 52 and get off, or when the rider walks by the side of the seat 52.

Since the rear arm 35 is supported to be rotatable about the longitudinal axis of the vehicle by interposing the elastic members 41 between the pivot shaft 39 and the tube 40, an independent suspension of the left and right wheels 46, 46 is provided with a simple constitution. For example, when the right rear wheel 46 negotiates a swell on the road, the rear arm 35 rotates about the longitudinal axis of the vehicle so that the right rear end of the rear arm is raised to absorb shocks and secure ground contact of the rear wheels 46, 46. Also, a four-wheel independent suspension of a simple constitution may be provided along with the swing motion of the wheel shaft arm member 6 supporting the front wheels 8, 8.

Since the rear arm 35 is constituted with a large length in the longitudinal direction and with a smaller width toward the front of the vehicle, and since the elastic members 41 are disposed near the vehicle width center and the rear wheels 46 are disposed near the outer ends of the vehicle width, large displacements of the rear wheels 46 may be absorbed with a small deformation of the elastic members 41.

In this embodiment, since the seat 52 is attached so that the position of the seat 52 may be adjusted along the sloped surface of the rear half portion 2b, the seat position may be changed both in height and longitudinal position according to the physical size of the rider. This permits optimum adjustment of the steering handlebar position relative to the rider so that the most comfortable riding posture is provided.

In this embodiment, while the front end portion of the rear arm 35 is pivoted through the elastic members 41, 41, the pivoting structure may be the one shown in FIG. 6. In FIG. 6, the same symbols as those in FIG. 5 denote the same or corresponding parts.

The pivoting structure of FIG. 6 comprises the elastic members 41, 41 inserted into the left and right boss portions 36a, 36b; a pivot shaft 39 inserted in the center of the elastic members 41, 41, and the tube 40; collars 43, 43 interposed between the pivot shaft 39 and other components. They are secured together by turning a nut 39a.

In the pivoting structure of FIG. 6, the pivot shaft 39 is fixed relative to the rear half portion 2b of the vehicle body frame 2, and the elastic members 41 are disposed on both left and right ends of the rear arm 35. As a result, the rotatable angle of the rear arm 35 about the longitudinal axis of the vehicle is smaller than that of the structure shown in FIG. 5. Therefore, torsional rigidity of the entire vehicle body frame about the longitudinal axis of the vehicle is greater than that of the arrangement of FIG. 5. Such an arrangement is suitable for users who prefer stiffer ride feeling.

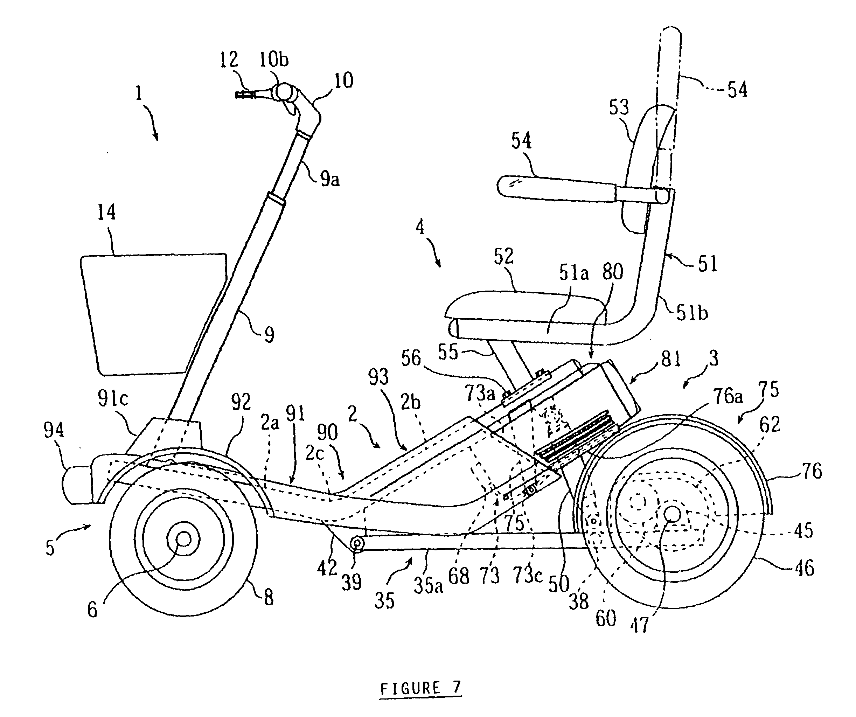

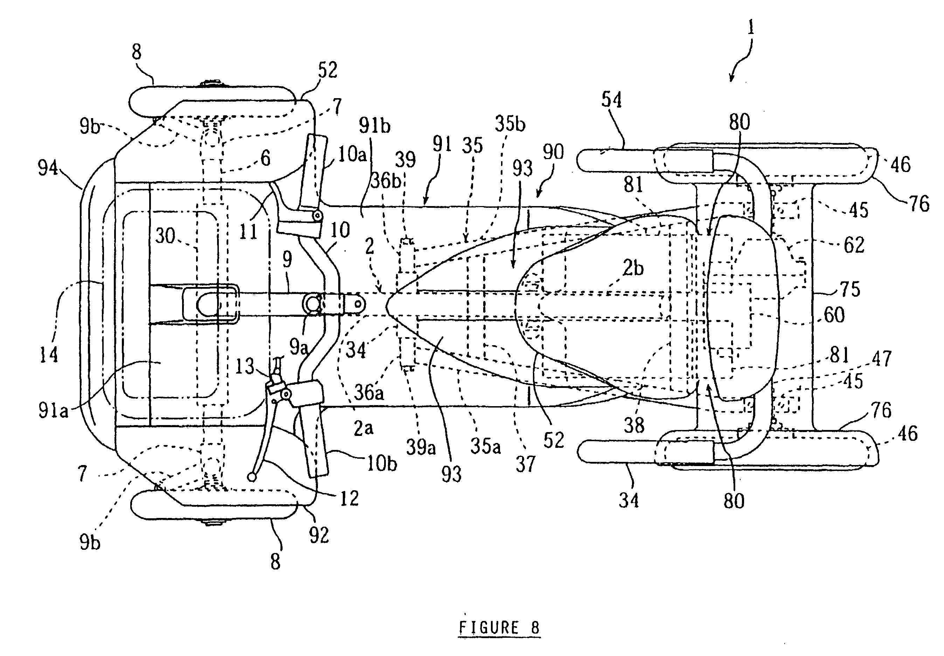

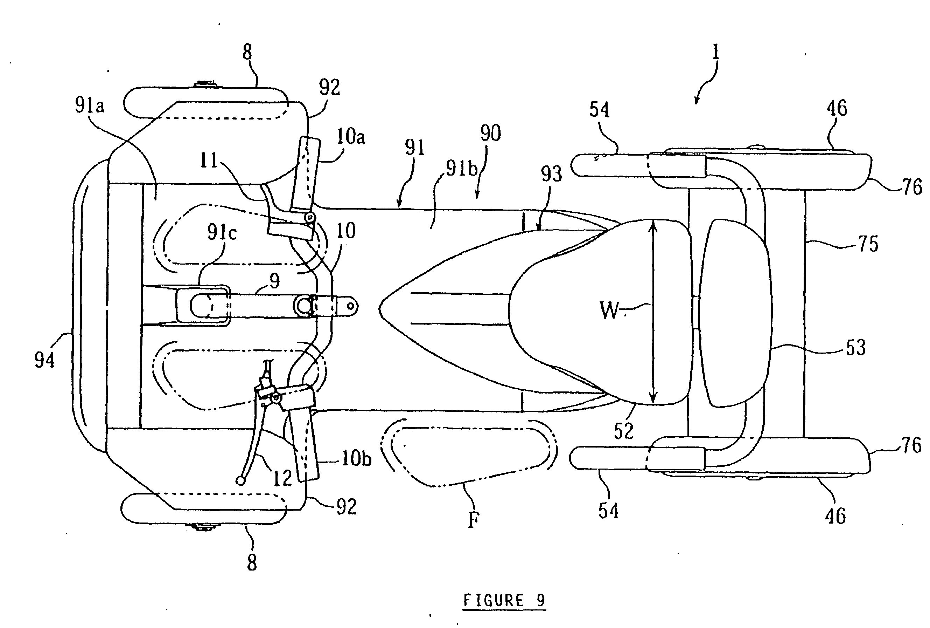

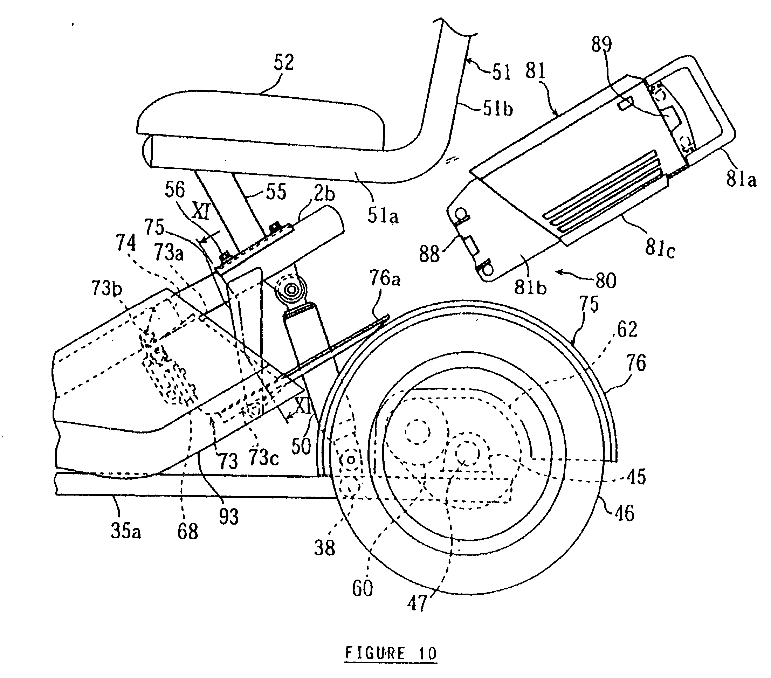

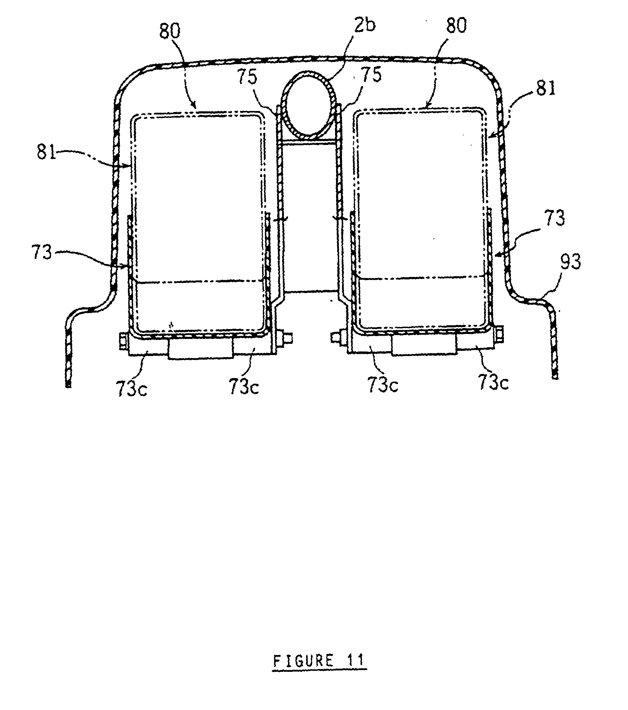

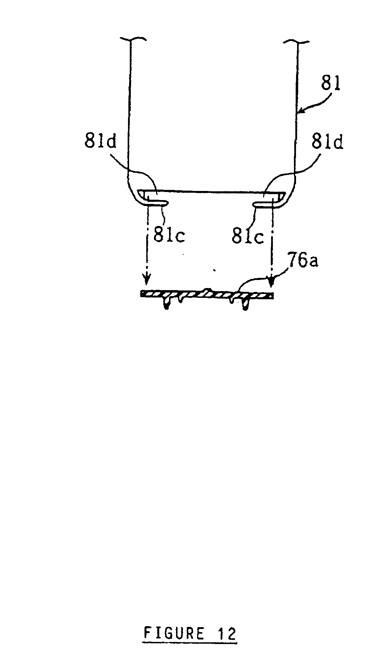

FIGs. 7 to 12 are for describing an electric motor-operated small four-wheel vehicle as a second embodiment. FIGs. 7 and 8 are side and plan views of the electric motor-operated small four-wheel vehicle. FIG. 9 is a plan view of a vehicle body cover. FIG. 10 illustrates insertion and removal of the battery. FIG. 11 shows a cross section taken along the line XI-XI in FIG. 10. FIG: 12 shows battery insertion and removal actions, with the same symbols as those in FIGs. 1 to 6 denoting the same or like parts.

The electric motor-operated small four-wheel vehicle 1 of this second embodiment is basically the same as that of the first embodiment. Main differences are that a vehicle body cover 90 is provided to cover the vehicle body frame 2 and to constitute the footstep portion, and that a new battery holding structure is employed. The following description is related only to those main differences.

The above-mentioned batteries 80 are installed in two sets in the space between the rear half portion 2b of the vehicle body frame 2 and the rear arm 35. Each of the batteries 80 comprises a plural number of single cells encased in a battery case 81 and held with the front edge 81b of each battery case 81 removably fitted to each of the battery holding boxes 73, 73 disposed on left and right sides of the shock absorber 50.

Each of the above-mentioned battery holding boxes 73 is a bottomed cylinder of suitable shape and size for holding the front portion 81b of the battery. The opening 73a of the battery holding box 73 is located in the space surrounded with the seat frame 51, left and right rear wheels 46, and the electric motor 60, and from there it faces obliquely up rearward.

The battery holding boxes 73 are secured in a suspended state to the rear half portion 2b by bolting an attachment lug portion 73b formed on the bottom wall to a bracket 74 fixed to the rear half portion 2b of the vehicle body frame 2, and by bolting an attachment lug portion 73c formed on the underside wall to a stay 75 fixed to the rear half portion 2b of the vehicle body frame 2.

A guide plate 76a is disposed to extend obliquely up rearward on the underside wall of the battery holding box 73. The guide plate 76a functions to support the underside of the battery case 81 when it is inserted in position and to guide the battery case 81 when it is inserted or taken out to and from the battery holding box 73 with the foldable grip 81a of the battery case 81 gripped by hand. That is to say, the guide plate 76a is slidably inserted into a guide groove 81d defined with the underside of the battery case 81 and a guide piece 81c.

On the bottom wall of the battery holding box 73 is disposed a male connector 68 for connecting the battery 80 to the electric motor 60 side. On the front end surface of the front end portion of the battery is disposed a female connector 88 to be electrically connected to the male connector 68. When the front end portion 81b of the battery is inserted in the battery holding box 73, the fema le connector 88 is automatically connected to the male connector 68.

A connection port 89 for charging is disposed at the rear end portion of the battery case 81. When a charger is connected to the connection port 89 for charging, the battery 80 may be charged either on or off the vehicle. When the grip 81a is folded, the grip 81a covers the connection port 89 to prevent mud or rain water from finding its way into the battery.

The above-mentioned vehicle body cover 90 extends in front and rear directions to cover the vehicle body frame 2 from above and is secured to the vehicle body frame 2. The vehicle body cover 90 is integrally formed with a footstep 91 for the rider to put feet on, front fender portions 92, 92 for covering the front wheels 8, 8 from above, and a side cover portion 93 for covering the left, right, and front parts of the area below the seat 52. A slip prevention rubber sheet (not shown) is applied to the top surface of the footstep portion 91. A hollow plastic bumper 94 extending in the vehicle width direction is secured to the front end of the footstep portion 91.

The above-mentioned footstep 91 comprises a wide footstep portion 91a extending over the entire area of the front wheels 8, 8 and a narrow footstep portion 91b extending continuously from the wide footstep portion 91a backward with a reduced width. The width in plan view of the narrow footstep portion 91b is set to be approximately the same as the width (w) in the vehicle width direction of the seat 52 and narrower than the distance between the left and right wheels 46,46. The wide footstep portion 91 a is swell-formed with a steering cover portion 91c surrounding the base portion of the steering pipe 9.

The left and right front fender portions 92 continue from the left and right side edges of the wide footstep portion 91a and extend obliquely upward in an arcuate shape to overhang the upper peripheries of the front wheels 8. The side cover portion 93 continues from the narrow footstep portion 91b and is swell-formed to cover the left and right battery holding cases 73, 73. The battery holding cases 73, 73 are covered with the side cover portion 93 from above and both sides so as not to be seen from outside.

Between the left and right rear wheels 46, 46 is disposed a rear cover portion 75 extending in the vehicle width direction. The rear cover portion 75 is formed separately from the vehicle body cover 90 and covers the electric motor 60 and the differential gear device 62 from above, front and rear, and is attached to the rear arm 35. The rear cover 75 is also formed with integral rear fender portions 76, 76 continuing from the left and right edges of the rear cover 75 in an arcuate shape to cover the left and right rear wheels 46, 46 from above. The rear cover portion 75 and the rear fender portions 76, 76 move up and down together with the rear arm 35.

Next, functions and effects of the second embodiment will be described.

With the small four-wheel vehicle 1 of this embodiment, since the vehicle body frame 2 is covered with the vehicle body cover 90 comprising the footstep portion 91, the front fender portions 92, 92 overhanging the left and right front wheels 8, 8, and the side cover portion 93 covering the area below the seat 52, the vehicle body from 2 is prevented from being exposed outside to improve external appearance.

Since the footstep portion 91 is constituted with the wide footstep portion 91a extending in the vehicle width direction between the left and right front wheels 8, 8 and the narrow footstep portion 91b continuously extending from the wide footstep portion 91a rearward while being narrowed toward inside, and the width of the narrow footstep potion 91b is set to be approximately the same as the width (w) of the seat 52 in the vehicle width direction, riding and getting off actions are made easy while securing sufficient space for putting feet on.

Since a sufficient footstep area is secured with the wide footstep portion 91a extending over the entire space between the left and right front wheels disposed with a wider wheel distance than the wheel distance between the rear wheels, stabilized riding posture is assured.

As for the ease of sitting on and getting off the seat 52, since the width of the narrow footstep portion 91b of the footstep portion 91 is set to be approximately the same as the width of the seat 52, as shown in FIG. 9, the rider may stand on the ground near the seat with one foot (F) placed near the seat 52, the rider need not to step on the footstep as with conventional footsteps but may be seated as the rider simply lowers the hip on the seat. Thus, ease of riding and getting off is improved.

Also, since the width of the narrow footstep portion 91b is set to be approximately the same as the width (w) of the seat 52 and to be narrower than the distance between the left and right rear wheels 46, 46, when the vehicle makes a turn, the portion of the footstep portion 91 between the front and rear wheels passes along a locus which is inside the locus of the inside rear wheel 46 and therefore that portion does not come in contact with or involve obstacles.

In the second embodiment, while the vehicle body cover 90 and the rear cover portion 75 are separate components, it is also possible to form the vehicle body cover 90, the rear cover portion 75, and the rear fenders 76 as a single body. In that case, the number of components is reduced and the external appearance is further improved.

Furthermore, since the battery holding cases 73 are disposed at the rear half portion 2b of the vehicle body frame 2 and the openings 73a of the battery holding cases 73 are made to face rearward of the vehicle, the batteries 80 may be inserted and taken out easily without interfering with other parts. This is the same effect as that with the first embodiment.

Also, since the front end of the battery case 81 is constituted to fit into the battery holding case 73, the battery holding case 73 is made smaller than that of the first embodiment, resulting in reduced weight and cost.

## Claims

1. A small vehicle comprising:
a vehicle body frame (2) having a front half portion (2a) disposed to extend longitudinally and horizontally between left and right front wheels (8) and near a vehicle width center, a rear half portion (2b) continuously extending from the front half portion (2a) obliquely rear upward, and supported with the left and right front wheels (8) and left and right rear wheels (46);
a seat (52) secured to the rear half portion (2b) so as to be located above the rear half portion (2b) of the vehicle body frame (2) **characterized by** a wheel shaft arm member (6) disposed to cross the front half portion (2a) of the vehicle body frame (2) approximately at right angles, supported on the front half portion (2a) through a swing support mechanism (21), and shaft-supporting the left and right front wheels.

2. Small vehicle according to claim 1, **characterized by** a battery (61,80) disposed in the direction obliquely rear upward along the rear half portion (2b) and secured thereto.

3. Small vehicle according to claim 1 or 2, **characterized in that** the swing support mechanism (21) is constituted to pivot-support a vehicle width center portion of the wheel shaft arm member (6) for up and down movement and to restrict the up and down swing angle by interposing a resilient force between the wheel shaft arm member (6) and the front half portion (2a).

4. Small vehicle according to at least one of the preceding claims 1 to 3, **characterized by** a rear arm (35) pivot-supported for up and down movement with a pivot shaft (39) disposed at a portion of the vehicle body frame (2) forward of the rear wheels (46), and a shock absorber (50) interposed between the portion of the rear arm (35) behind the rear arm pivoting portion and the rear half portion (2b).

5. Small vehicle according to claim 4. **characterized in that** the rear arm (35) comprises left and right arm members (35a,35b) disposed symmetrically on both left and right sides of the rear half portion (2b) with their mutual distance smaller toward the front of the vehicle, with the left and right arm members (35a,35b) connected together through connection members, and with the front end of the rear arm pivoted with the pivot shaft (34).

6. Small vehicle according to at least one of the preceding claims 2 to 5; **characterized in that** the battery (61,80) may be inserted into and taken out of a battery holding box (65,73) secured to the rear half portion (2b), a rear end opening (65a,73a) of the battery holding box (65,73) is made to face rearward of the vehicle and to be opened and closed with a lid member (66).

7. Small vehicle according to at least one of the preceding claims 2 to 6, **characterized in that** two battery holding boxes (65) are disposed side by side on left and right sides of the rear half portion (2b) and one of the battery holding boxes (65) is adapted to be used as a small object holding compartment.

8. Small vehicle according to at least one of the preceding claims 2 to 5, **characterized in that** the battery (65,80) comprises a battery case (61a,81) holding a plural number of single cells, and a front edge (81b) of the battery case (81) is removably fitted into a bottomed battery holding case secured to the rear half portion (2b).

9. Small vehicle according to at least one of the preceding claims 1 to 8, **characterized in that** an attachment position of the seat (52) on the rear half portion (2b) is made adjustable along the rear half portion (2b) in forward and rearward directions, and a steering shaft (9a) for steering the front wheels (8) in the left and right directions is extended upward from between the left and right front wheels (8), and a steering handlebar (10) is secured to the upper portion of the steering shaft (9a).

10. Small vehicle according to at least one of the preceding claims 1 to 9, **characterized in that** a distance between the left and right rear wheels (46) is set to be smaller than a distance between the left and right front wheels (8).

11. Small vehicle according to at least one of the preceding claims 1 to 10, **characterized in that** paired left and right footsteps (15) are disposed between the left and right front wheels (8) so as to sandwich the steering shaft (9a).

12. Small vehicle according to at least one of the preceding claims 1 to 10, **characterized by** a footstep (91) comprising a wide footstep portion (91 a) extending in the vehicle width direction between the left and right front wheels (8), and a narrow footstep portion (91 b) of approximately the same width as the width of the seat (52) in plan view, extending continuously from the wide footstep portion (91a) rearward of the vehicle and narrowing toward the rear of the vehicle.

## Patentansprüche

1. Kleines Fahrzeug mit:
einem Fahrzeugkarosserierahmen (2), der ein Vorderhälftenteil (2a) hat, angeordnet um sich längs und horizontal zwischen dem linken und rechten Vorderrad (8) und in der Nähe der Fahrzeugbreitenmitte zu erstrecken, einem Hinterhälftenteil (2b), der sich kontinuierlich von dem Vorderhälftenteil (2a) schräg nach hinten aufwärts erstreckt, und durch das linke und rechte Vorderrad (8) und das linke und rechte Hinterrad (46) gelagert ist;
einem Sitz (52), befestigt an dem Hinterhälftenteil (2b) derart, dass er oberhalb des Hinterhälftenteiles (2b) des Fahrzeugkarosserierahmens (2) angeordnet ist, **gekennzeichnet durch** ein Radwellen- Armteil (6), angeordnet um den Vorderhälftenteil (2a) des Fahrzeugkarosserierahmens (2), der **durch** eine Schwenklagervorrichtung (21) mittels des Vorderhälftenteiles (2a) gelagert ist, ungefähr rechtwinklig zu kreuzen und das rechte und linke Vorderrad wellenzulagern.

2. Kleines Fahrzeug nach Anspruch 1, **gekennzeichnet durch** eine Batterie (61, 80), angeordnet in der Richtung schräg nach hinten aufwärts entlang des Hinterhälftenteiles (2b) und daran befestigt.

3. Kleines Fahrzeug nach Anspruch 1 oder 2, **dadurch gekennzeichnet, dass** die Schwenklagervorrichtung (21) zum Drehlagem eines Fahrzeugbreitenmittelabschnittes des Radwellen- Armteiles (6) für eine Auf- und Ab- Bewegung ausgebildet ist, und um den Auf- und Ab- Schwenkwinkel durch Einbringen einer elastischen Kraft zwischen dem Radwellen- Armteil (6) und dem Vorderhälftenteil (2a) zu begrenzen.

4. Kleines Fahrzeug nach zumindest einem der vorhergehenden Ansprüche 1 bis 3, **gekennzeichnet durch** einen hinteren Arm (35), drehgelagert für eine Auf- und Ab- Bewegung **durch** eine Schwenkwelle (39), angeordnet an einem Abschnitt des Fahrzeugkarosserierahmens (2), vor den Hinterrädern (46), und einen Stoßdämpfer (50), eingebracht zwischen dem Abschnitt des hinteren Arms (35) hinter den Hinterarm- Drehabschnitt und dem Hinterhälftenteil (2b).

5. Kleines Fahrzeug nach Anspruch 4, **dadurch gekennzeichnet, dass** der hintere Arm (35) linke und rechte Armteile (35a, 35b) aufweist, symmetrisch sowohl auf der linken, als auch auf der rechten Seite des Hinterhälftenteiles (2b) angeordnet, wobei ihr gegenseitiger Abstand in Richtung nach der Vorderseite des Fahrzeuges kleiner wird, wobei das linke und rechte Armteil (35a, 35b) durch Verbindungsteile verbunden sind, und wobei das vordere Ende des rechten Armes mit der Schwenkwelle (34) sich dreht.

6. Kleines Fahrzeug nach zumindest einem der vorhergehenden Ansprüche 2 bis 5, **dadurch gekennzeichnet**, das die Batterie (61, 80) in einen Batteriehaltebehälter (63, 73) oder aus diesem entnommen werden kann, der an dem Hinterhälftenteil (2b) befestigt ist, wobei eine hintere Endöffnung (65a, 73a) des Batteriehaltebehälter (63, 73) veranlasst ist, um nach rückwärts des Fahrzeugs zu weisen, und die mit einem Deckelteil (66) geöffnet oder geschlossen werden kann.

7. Kleines Fahrzeug nach zumindest einem der vorhergehenden Ansprüche 2 bis 6, **dadurch gekennzeichnet, das** zwei Batteriehaltebehälter (65) nebeneinander an der linken und rechten Seite des Hinterhälftenteiles (2b) angeordnet sind, und einer der Batteriehaltebehälter (65) vorgesehen ist, um als Vorratsraum für kleine Gegenstände verwendet zu werden.

8. Kleines Fahrzeug nach zumindest einem der vorhergehenden Ansprüche 2 bis 5, **dadurch gekennzeichnet, das** die Batterie (65, 80) ein Batteriegehäuse (61a, 81) aufweist, das eine Mehrzahl von einzelnen Zellen enthält, und wobei eine vordere Kante (81b) des Batteriegehäuses (81) entfembar in einen mit einem Boden versehenen Batteriehaltebehälter (65) eingesetzt ist, der an dem Hinterhälftenteil (2b) befestigt ist.

9. Kleines Fahrzeug nach zumindest einem der vorhergehenden Ansprüche 1 bis 8, **dadurch gekennzeichnet**, das eine Befestigungsposition des Sitzes (52) an dem Hinterhälftenteil (2b) entlang des Hinterhälftenteiles (2b) in die Richtung nach vom und nach hinten einstellbar gemacht ist, und eine Lenkwelle (9a) zum Lenken der Vorderräder (8) sich in die linke oder rechte Richtung sich aufwärts von zwischen dem linken und rechten Vorderrad (8) ausstreckt, und eine Lenkstange (10) an dem oberen Abschnitt der Lenkwelle (9a) befestigt ist.

10. Kleines Fahrzeug nach zumindest einem der vorhergehenden Ansprüche 1 bis 9, **dadurch gekennzeichnet**, das ein Abstand zwischen dem linken und rechten Hinterrad (46) festgelegt ist, um kleiner als ein Abstand zwischen dem linken und rechten Vorderrad (8) zu sein.

11. Kleines Fahrzeug nach zumindest einem der vorhergehenden Ansprüche 1 bis 10, **dadurch gekennzeichnet**, das paarweise linke und rechte Trittbretter (15) zwischen dem linken und rechten Vorderrad (8) angeordnet sind, um die Lenkwelle (9a) dazwischenzunehmen.

12. Kleines Fahrzeug nach zumindest einem der vorhergehenden Ansprüche 1 bis 10, **gekennzeichnet durch** ein Trittbrett (91) mit einem breiten Trittbrettabschnitt (91 a), der sich in die Richtung der Fahrzeugbreite zwischen dem linken und rechten Vorderrad (8) erstreckt, und einen schmalen Trittbrettabschnitt (91 b) von ungefähr derselben Breite wie die Breite des Sitzes (52) in der Draufsicht, der sich kontinuierlich von dem breiten Trittbrettabschnitt (91a) nach hinten des Fahrzeuges erstreckt und in die Richtung zu der Rückseite des Fahrzeuges hin schmaler wird.

## Revendications

1. Petit véhicule comprenant :
un cadre de véhicule (2) ayant une demi-portion avant (2a) disposée pour s'étendre longitudinalement et horizontalement entre des roues avant gauche et droite (8) et près d'un centre en largeur du véhicule, une demi-portion arrière (2b) s'étendant en continu depuis la demi-portion avant (2a) à l'oblique en arrière et vers le haut, et supportée par les roues avant gauche et droite (8) et les roues arrière gauche et droite (46) ;
un siège (52) fixé à la demi-portion arrière (2b) de manière à être situé au-dessus de la demi-portion arrière (2b) du cadre de véhicule (2),
**caractérisé par** un élément formant bras d'axe de roue (6) disposé pour croiser la demi-portion avant (2a) du cadre du véhicule (2) approximativement à angles droits, supporté sur la demi-portion avant (2a) par un mécanisme de palier à bascule (21), et supportant par axe les roues avant gauche et droite.

2. Petit véhicule selon la revendication 1, **caractérisé par** une batterie (61, 80) disposée dans le sens à l'oblique en arrière et vers le haut le long de la demi-portion arrière (2b) et fixée dessus.

3. Petit véhicule selon la revendication 1 ou 2, **caractérisé en ce que** le mécanisme de palier à bascule (21) est constitué pour supporter par pivot une portion formant centre en largeur du véhicule de l'élément formant bras d'axe de roue (6) pour un mouvement vers le haut et vers le bas et pour limiter l'angle de bascule vers le haut et vers le bas en interposant une force résiliente entre l'élément formant bras d'axe de roue (6) et la demi-portion avant (2a).

4. Petit véhicule selon au moins l'une des revendications précédentes 1 à 3, **caractérisé par** un bras arrière (35) supporté par pivot pour un mouvement vers le haut et vers le bas avec un axe formant pivot (39) disposé sur une portion du cadre du véhicule (2) en avant des roues arrière (46), et un amortisseur de chocs (50) interposé entre la portion du bras arrière (35) derrière la portion pivotant le bras arrière et la demi-portion arrière (2b).

5. Petit véhicule selon la revendication 4, **caractérisé en ce que** le bras arrière (35) comprend des éléments formant bras gauche et droit (35a, 35b) disposés symétriquement sur les deux côtés gauche et droit de la demi-portion arrière (2b), leur distance mutuelle étant plus petite vers l'avant du véhicule, les éléments formant bras gauche et droit (35a, 35b) étant raccordés ensemble par des éléments de raccordement, et l'extrémité avant du bras arrière étant pivotée avec l'axe de pivot (34).

6. Petit véhicule selon au moins l'une des revendications précédentes 2 à 5, **caractérisé en ce que** la batterie (61, 80) peut être insérée dans une, et retirée d'une, boîte pour contenir la batterie (65, 73) fixée à la demi-portion arrière (2b), une ouverture d'extrémité arrière (65a, 73a) de la boîte pour contenir la batterie (65, 73) étant réalisée pour faire face vers l'arrière du véhicule et pour être ouverte et fermée par un élément formant couvercle (66).

7. Petit véhicule selon au moins l'une des revendications précédentes 2 à 6, **caractérisé en ce que** deux boîtes pour contenir la batterie (65) sont disposées côte à côte sur les côtés gauche et droit de la demi-portion arrière (2b) et **en ce que** l'une des boîtes pour contenir la batterie (65) est adaptée pour être utilisée comme compartiment renfermant un petit objet.

8. Petit véhicule selon au moins l'une des revendications précédentes 2 à 5, **caractérisé en ce que** la batterie (65, 80) comprend un boîtier de batterie (61a, 81) renfermant un grand nombre de cellules simples, et **en ce qu'**un bord avant (81b) du boîtier de batterie (81) est ajusté de manière amovible dans un boîtier de fond pour contenir la batterie, fixé à la portion arrière (2b).

9. Petit véhicule selon au moins l'une des revendications précédentes 1 à 8, **caractérisé en ce qu'**une position de fixation du siège (52) sur la demi-portion arrière (2b) est ajustable le long de la demi-portion arrière (2b) dans des sens avant et arrière, et un axe de direction (9a) destiné à diriger les roues avant (8) dans les sens gauche et droit est étendu vers le haut depuis un point situé entre les roues avant gauche et droite (8), et un guidon de direction (10) est fixé à la portion supérieure de l'axe de direction (9a).

10. Petit véhicule selon au moins l'une des revendications précédentes 1 à 9, **caractérisé en ce qu'**une distance entre les roues arrière gauche et droite (46) est établie pour être inférieure à une distance entre les roues avant gauche et droite (8).

11. Petit véhicule selon au moins l'une des revendications précédentes 1 à 10, **caractérisé en ce que** deux repose-pieds gauche et droit (15) sont disposés entre les roues avant gauche et droite (8) de manière à prendre en sandwich l'axe de direction (9a).

12. Petit véhicule selon au moins l'une des revendications précédentes 1 à 10, **caractérisé par** un repose-pied (91) comprenant une portion de repose-pied large (91a) s'étendant dans le sens de la largeur du véhicule entre les roues avant gauche et droite (8), et une portion de repose-pied étroite (91b) de la même largeur approximativement que la largeur du siège (52) en vue en plan, s'étendant en continu depuis la portion de repose-pied large (91a) vers l'arrière du véhicule et rétrécissant vers l'arrière du véhicule.
